# EUROPEAN PATENT SPECIFICATION

(11) **EP 2 296 212 B1**
(45) Date of publication and mention of the grant of the patent: **27.11.2013**
(21) Application number: 10159209.5
(22) Date of filing: 07.04.2010
(51) Int. Cl.: H01M 8/12, H01M 8/24

(54) **A Cell Module for a Solid Oxide Fuel Cell**
Zellenmodule für eine Festkörperoxidbrennstoffzelle
Module cellulaire pour pile à combustible à oxyde solide

(30) Priority: 15.09.2009 US 242689 P
(43) Date of publication of application: 16.03.2011
(73) Proprietor: Samsung SDI Co., Ltd., Gyeonggi-do (KR)
(72) Inventor: Taniguchi, Shunsuke, Gyeonggi-do (KR)
(74) Representative: Walaski, Jan Filip

(56) References cited:
- EP-A1- 1 603 183
- EP-A1- 1 624 521
- WO-A1-2007/099095
- JP-A- 2001 176 523
- US-A1- 2007 269 693

## Description

The present invention relates to a cell module for a solid oxide fuel cell, particularly but not exclusively to a structure in which tube-type solid oxide fuel cells are combined in series.

Solid oxide fuel cells (SOFCs) have advantages of no pollution, high-efficiency power generation, and the like. The SOFCs are applied to stationary power generation systems, small independent sources and vehicle power sources. An SOFC cell may be manufactured as a tube-type cell, a flat-tube-type cell or a flat-plate-type cell. The tube-type or flat-tube-type cell may be manufactured to have a structure for a cathode supported cell, a segmented in series cell, an anode supported cell, or the like.

Generally, anode supported SOFC cells are used for small SOFC systems in the range of 1 to 10KW. On the other hand, cathode supported SOFC cells or segmented in series cells are used for large SOFC systems in the range of 100KW or more.

EP 1 624 521, EP 1 603 183, WO 2007/099095 and JP 2001 176523 disclose fuel cell modules in which fuel flows through a tube.

According to the invention, there is provided a cell module for a solid oxide fuel cell as defined in claim 1.

In one embodiment, there is provided a combined cell module for a solid oxide fuel cell (SOFC) provided with a structure in which a plurality of anode supported SOFC cells are combined in series, which can improve mechanical stability and reliability. In another embodiment, there is provided a combined cell module for an SOFC, which can effectively be used in the design and manufacture of a large-size SOFC system using a plurality of anode supported SOFC cells.

According to an aspect of the invention, there is provided a cell module for a solid oxide fuel cell, comprising first and second sub-cells and a connector between the sub-cells connecting the sub-cells to each other, each of the sub-cells comprising a hollow portion, first and second electrodes and an electrolyte layer between the electrodes and a support member extending along the length of the sub-cell within the hollow portion. A plurality of the support members may be connected together in a linear configuration to provide a substantially straight tube through which fluid can flow. The connector may include a body and a coupling portion protruding from the body for connecting the connector to the support member. The coupling portion may include a screw thread arranged to engage with a corresponding screw thread at an end of the support member.

The support member may have a screw thread at each end thereof and the coupling portion of the connector may have a screw thread at each end thereof to enable the support member to be connected between two of the connectors. The support member may be integrally provided with the connector. The cell module may further comprise a coupling portion for connecting the support member of the connector of one sub-cell to the connector of another sub-cell. The coupling portion may comprise a double male-ended screw thread for insertion into a female screw thread in the connector and a female screw thread in the support member.

The cell module may further comprise a current collecting layer disposed on the second electrode, on the electrolyte layer and on the connector for electrically connecting two adjacent sub-cells to one another. The connector may comprise a main body and a support member body, further comprising a resilient portion connected to the main body.

The cell module may further comprise a current collecting layer disposed on the second electrode and an interconnection connecting the current collecting layer to the connector, for electrically connecting two adjacent sub-cells to one another.

The connector and the support member may be made of materials having different coefficients of thermal expansion, wherein the relative lengths of the coupling portion and the support member are arranged to reduce the effects of thermal expansion.

The resilient portion may be arranged to expand and contract between the sub-cells so as to reduce the effects of thermal expansion.

The support member of one sub-cell may be configured to be coupled to the connector of another sub-cell, and the cell module may further comprise insulating members arranged between the support member and the connector to insulate the support members of adjacent sub-cells from one another.

The support member may be rod-shaped and the support members of adjacent sub-cells may be connected to one another to provide a substantially linear rod running through the cell module. The support member may be hollow.

The cell module may further comprise a conducting porous member within the hollow portion, the porous member forming a sleeve for receiving the support member.

The cell module may further comprise an insulating sealing member disposed at a boundary between the connector and a sub-cell.

Embodiments of the invention will now be described by way of example with reference to the accompanying drawings, in which:
FIG. 1 is a schematic front view of a cell module for a solid oxide fuel cell (also referred to as an SOFC combined cell module or combined cell module) according to a first embodiment.
FIG. 2 is a sectional view the SOFC combined cell module according to the first embodiment.
FIG. 3A is a sectional view of any one of sub-cells constituting the combined cell module of FIG. 2.
FIG. 3B is an exploded sectional view of the sub-cell of FIG. 3A.
FIG. 4A is a front view of an A-type support member of FIG. 3B.
FIG. 4B is a right side view of the A-type support member of FIG. 4A.
FIG. 5A is a front view of an A-type connector of FIG. 3B.
FIG. 5B is a left side view of the A-type connector of FIG. 5A.
FIG. 5C is a right side view of the A-type connector of FIG. 5A.
FIG. 6 is a schematic front view of a combined cell module according to a second embodiment.
FIG. 7 is a sectional view of the combined cell module according to the second embodiment.
FIG. 8 is a sectional view of any one of sub-cells constituting the combined cell module of FIG. 7.
FIG. 9A is a front view of a support member integrated with a connector (hereinafter, referred to as a B-type support member), used in the combined cell module of FIG. 7.
FIG. 9B is a longitudinal sectional view of the B-type support member of FIG. 9A.
FIG. 9C is a left side view of the B-type support member of FIG. 9A.
FIG. 9D is a right side view of the B-type support member of FIG. 9A.
FIG. 10 is a front view of a B-type coupling portion used in the combined cell module of FIG. 7.
FIG. 11 is a schematic front view of a combined cell module according to a third embodiment.
FIG. 12 is a sectional view of the combined cell module according to the third embodiment.
FIG. 13 is a sectional view of any one of sub-cells constituting the combined cell module of FIG. 12.
FIG. 14A is a front view of a support member integrated with a connector and a resilient portion (hereinafter, referred to as a C-type support member), used in the combined cell module of FIG. 12.
FIG. 14B is a longitudinal sectional view of the C-type support member of FIG. 14A.
FIG. 14C is a left side view of the C-type support member of FIG. 14A.
FIG. 14D is a right side view of the C-type support member of FIG. 14A.
FIG. 15 is a front view a C-type coupling member applicable to the combined cell module of FIG. 12.
FIG. 16 is a schematic front view of a combined cell module according to a fourth embodiment.
FIG. 17 is a sectional view of the combined cell module according to the fourth embodiment.
FIG. 18 is a sectional view of any one of sub-cells constituting the combined cell module of FIG. 17.
FIG. 19A is a front view of a support member integrated with a connector and a resilient portion (hereinafter, referred to as a D-type support member), used in the combined cell module of FIG. 17.
FIG. 19B is a longitudinal sectional view of the D-type support member of FIG. 19A.
FIG. 19C is a left side view of the D-type support member of FIG. 19A.
FIG. 19D is a right side view of the D-type support member of FIG. 19A.

In the following description, detailed explanation of known features may be omitted to avoid unnecessarily obscuring the subject manner of the present invention. In the drawings, like elements are represented by like reference numerals, and the thickness and size of layers may be exaggerated for clarity.

The manifold mentioned in the following description refers to a structure provided with a flow path for smoothly supplying, distributing or discharging a fluid. In the description related to the accompanying drawings, a housing or boundary wall forming a manifold is designated by a reference numeral and referred to as the manifold, for convenience of illustration.

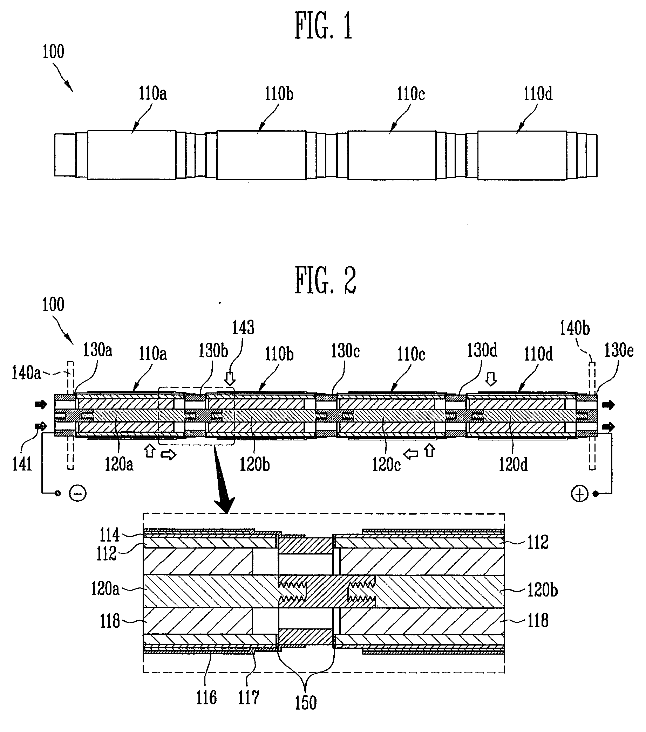

Referring to FIGS. 1 and 2, the combined cell module 100 is manufactured by combining a plurality of SOFC sub-cells 110a, 110b, 110c and 110d with the same structure with one another in series in the flow direction of a fuel. Here, each of the SOFC sub-cells becomes a unit cell structure for manufacturing the combined cell module 100. A connector 130a, 130b, 130c or 130d (hereinafter, referred to as an A-type connector) may be provided between adjacent SOFC sub-cells.
Each of the sub-cells 110a, 110b, 110c and 110d includes a plurality of tube-type SOFC cells and an A-type support member 120a, 120b, 120c or 120d inserted into a hollow portion of each of the SOFC cells. Hereinafter, each of the SOFC cells is referred to as a cell. Each of the cells has a structure in which an anode and a cathode are stacked on both sides of an electrolyte layer, respectively. Each of the cells becomes a unit in which electricity is generated by an electrochemical reaction of a fuel and an oxidizer. Here, the fuel is supplied to the anode, and the oxidizer is supplied to the cathode.

Each of the A-type connectors 130a, 130b, 130c and 130d is integrally provided with a buffer portion for reducing a difference between thermal expansion coefficients between the cell and the support member. The detailed implementation of the buffer portion will be described in detail below.

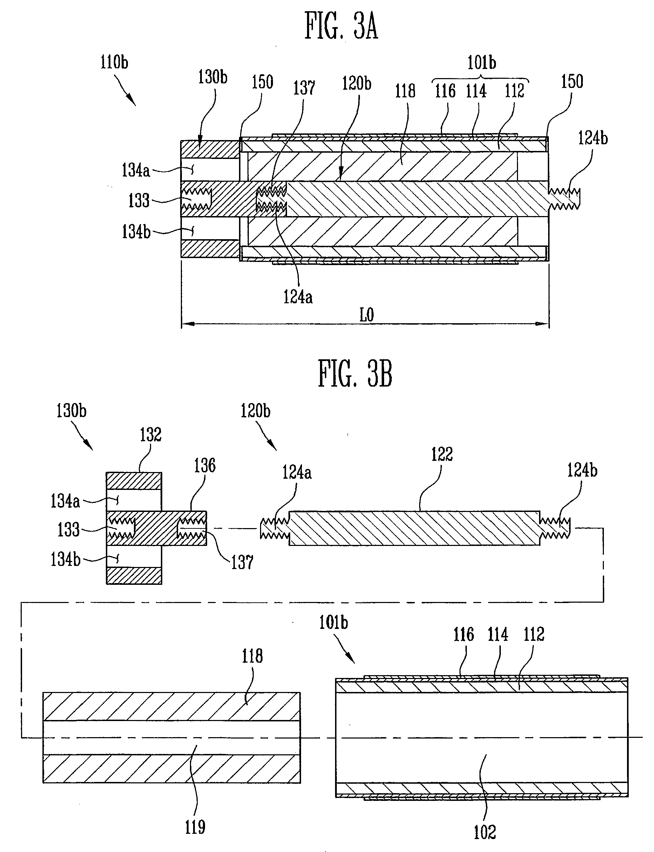

In one embodiment, both end portions of the combined cell module 100 in its longitudinal direction are connected to first and second manifolds 140a and 140b, respectively. In this case, the first A-type connector 130a is disposed to connect the first SOFC sub-cell 110 to the first manifold 140a so that a fluid can flow therethrough. The first A-type connector 130a may have a structure in which a first female screw (see 133 of FIG. 3A) is omitted or may be configured so that the hole of the first female screw is filled with a predetermined material. An end connector 130e may be provided at one side of the fourth SOFC sub-cell 110d. The end connector 130e is disposed to be connected to the second manifold 140b so that a fluid can flow therethrough. The end connector 130e may have a structure in which a portion (see 136 of FIG. 3B) of the A-type connector is omitted.

The combined cell module 100 has a current collecting layer 117 disposed on a second electrode 116 of each of the SOFC sub-cells 110a, 110b, 110c and 110d. In one embodiment, as illustrated in the partially enlarged view of FIG. 2, the current collecting layer 117 is extended to cover the second electrode 116 of the first SOFC sub-cell 110a, to cover an electrolyte layer 114 exposed to one side of the second electrode 116 and to cover a portion of the A-type connector 130b in the second SOFC sub-cell 110b adjacent to the first SOFC sub-cell 110a.

In this embodiment, two adjacent sub-cells are electrically connected to each other in series by the current collecting layer 117, the conductive A-type connector, a conductive porous member 118 being in contact with the A-type connector, an insulative sealing member 150 and the insulative A-type support member. That is, the current collecting layer 117 being in contact with the second electrode 116 of the first SOFC sub-cell 110a is connected to the porous member 118 of the second SOFC sub-cell 110b adjacent to the first SOFC sub-cell 110a through the A-type connector 130b, so that the combined cell module 100 can be provided with not only a physically serial connection structure but also an electrically serial connection structure.

Any one of the SOFC sub-cells (hereinafter, referred to as sub-cells) constituting the combined cell module 100 according to the first embodiment of the present invention will be described in more detail with reference to FIGS. 3A to 5C.

Referring to FIGS. 3A and 3B, the sub-cell 110b includes a tube-type cell 101b and an A-type support member 120b inserted into a hollow portion 102 of the tube-type cell 101b. The sub-cell 110b may further include a porous member 118 and a sealing member 150. In FIG. 3B, the sealing member 150 is omitted.

The A-type connector 130b is basically disposed between two adjacent tube-type cells. However, it is described in this embodiment that the A-type connector 130b is included in the sub-cell 110b for convenience of illustration with respect to the combined cell module 100.

The tube-type cell 101b is provided with a structure in which a first electrode 112, an electrolyte layer 114 and a second electrode 116 are stacked. The electrolyte layer 114 and the second electrode 116 are sequentially stacked on the outer surface of the first electrode 112. The second electrode 116 may be formed to have a shorter length than that of the electrolyte layer 114 so that the electrolyte layer 114 is exposed to both end portions of the cell 101b in its longitudinal direction. Thus, the second electrode 116 is not electrically short-circuited with the first electrode 112.

In one embodiment, the first electrode 112 may be formed as a tube-type anode support having the hollow portion 102. A porous Ni-YSZ cermet may be used as the material of the first electrode 112. The electrolyte layer 114 may be formed of an ion conducting oxide for transporting oxygen ions, e.g., yttria stabilized zirconia (YSZ). The second electrode 116 may be formed of a porous mixed conducting oxide. The tube-type cell 101b including the first electrode 112, the electrolyte layer 114 and the second electrode 116 generates electricity and water by means of an electrochemical reaction of hydrogen and oxygen, respectively supplied to the first and second electrodes 112 and 116.

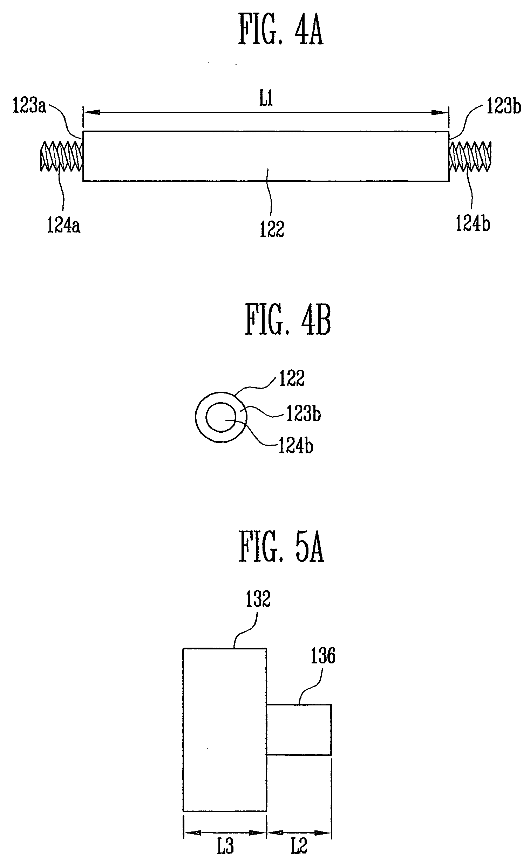

The A-type support member 120b is inserted into the hollow portion 102 of the tube-type cell 101b. The A-type support member 120b includes a rod-shaped body 122 of which the interior is fully filled. The A-type support member 120b further includes combining portions 124a and 124b respectively disposed at both end portions of the body 122 with stepped portions 123a and 123b interposed therebetween (see FIGS. 4A and 4B). The combining portions 124a and 124b may have the shape of a male screw having a smaller sectional area than that of the body 122. Here, the male screw has convex and concave portions spirally formed on its surface. In one embodiment, the A-type support member 120b may be formed of alumina (Al₂O₃). The thermal expansion coefficient of the alumina is about 8x10⁻⁶[K⁻¹] from room temperature to 1000°C.

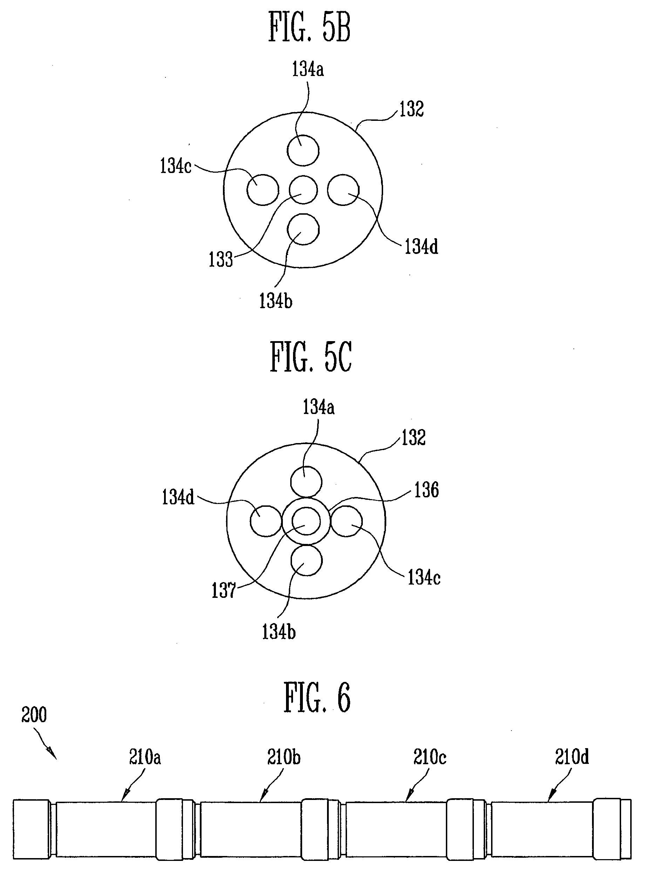

In one embodiment, the A-type connector 130b has a structure in which a shaft portion protrudes from a central portion at one side of a wheel-shaped body 132. That is, the A-type connector 130b includes a first female screw 133 formed inside the central portion of a first surface of the body 132, a plurality of openings 134a, 134b, 134c and 134d formed around the first female screw 133 to pass through the body 132, and a coupling portion 136 protrudes outside from the central portion of a second surface opposite to the first surface of the body 132 (see FIGS. 5A to 5C). The coupling portion 136 is integrally provided with the A-type connector 130b and has a sectional area and a sectional shape, identical to those of the A-type support member 120b. A second female screw 137 is provided at a central portion of the coupling portion 136 so that the first and second female screws 133 and 137 face each other. The second female screw 137 of the A-type connector 130b is screw-connected to the combining portion 124a at one side of the A-type support member 120b.

In one embodiment, the A-type connector 130b may be formed of ferrite stainless steel. The thermal expansion coefficient of the ferrite stainless steel is about 13x10⁻⁶[K⁻¹] from room temperature to 1000°C.

The length L2 (see FIG. 5A) of the coupling portion 136 is appropriately controlled depending on a difference between thermal expansion coefficients of the cell 101b and the A-type support member 120b. In one embodiment, the ratio of the length L2 of the coupling portion to the length L1 of the A-type support member (see FIG. 4A) is determined so that the thermal expansion coefficient of the combined structure of the coupling portion 136 and the A-type support member 120b is 95 to 105% of the thermal expansion coefficient of the individual sub-cells. For example, the length L1 (see FIG. 4A) of the A-type support member 120b may be about 80% and the length L2 of the coupling portion 136 may be about 20% with respect to the length obtained by roughly subtracting the length L3 (see FIG. 5A) of the body 132 of the A-type connector 130b from the length L0 (see FIG. 3A) of the sub-cell 110b. In this case, the thermal expansion coefficient of the combined structure of the A-type support member 120b and the coupling portion 136 is about 9x10⁶[K⁻¹] from room temperature to 1000°C.

If the length L2 of the coupling portion 136 is controlled, i.e., if the ratio of the lengths L1 and L2 of the A-type support member 120b and the coupling portion 136 is controlled, it is possible to prevent undesired thermal stress from being generated from the combined cell module 100 due to the difference of thermal expansion coefficients between the cells and the support members.

Referring back to FIGS. 3A and 3B, the porous member 118 may be provided between the first electrode 112 and the A-type support member 120b in the sub-cell 110b. The porous member 118 may be formed in the shape of a pipe having a hollow portion 119 by appropriately pressurizing a flexible member. The material of the porous member 118 may include a metal felt such as a nickel felt and a metal mesh having a similar shape to the metal felt. The porous member 118 may have a conducting property.

The sealing member 150 is provided at a boundary portion between the cell 101b and the A-type connector 130b. The sealing member 150 may be provided at both end portions of the sub-cell 110b in its longitudinal direction. In one embodiment, the sealing member 150 is formed of a material having a high sealing performance when pressure stress is generated in the A-type support member 120b and the cell 101b in operation of the combined cell module 100. The material of the sealing member 150 may include a Mica-based material and Thermiculite (product name). If the sealing member 150 is used, a manufacturing process can be simplified as compared with a sealing process using a brazing technique, and impurity mixture can be reduced as compared with a glass-type sealing process.

Hereinafter, the process of manufacturing the combined cell module 100 of the first embodiment will be described in more detail.

First, a yttria-stabilized zirconia (YSZ) powder mixed with 40vol% nickel (Ni), available for an anode electrode material, is kneaded by adding activated carbon, organic binder and water to the YSZ powder, and the kneaded slurry is extrusion-molded. After drying the extrusion-molded slurry, an anode support tube is prepared by sintering the dried slurry at about 1300°C.

Subsequently, the YSZ powder that is an electrolyte material is prepared as an electrolyte slurry, and the electrolyte slurry is then dip-coated on the anode support tube using a slurry coating technique. The electrolyte slurry coated on the anode support tube is dried at a room temperature and then sintered at about 1400°C. Subsequently, a (La,Sr)MnO₃ (LSM) powder available for a cathode material is prepared as a cathode slurry, and the cathode slurry is then dip-coated on the electrolyte layer of the anode support tube. The cathode slurry coated on the electrolyte layer of the anode support tube is dried and then sintered at about 1200°C.

The manufactured SOFC cell has an outer diameter of about 20mm, an inner diameter of about 16mm and a length of about 300mm.

Subsequently, a nickel felt is inserted into the manufactured SOFC cell. Then, the A-type support member formed of alumina and the A-type connector formed of stainless steel are prepared, and the combining portion 124a at one side of the A-type support member is screw-connected to a second female screw 137 of the A-type connector.

Subsequently, the A-type support member having the A-type connector combined at one side thereof is inserted in a hollow portion of the cell into which the nickel felt is inserted from the other side opposite to the one side of the A-type support member. In another embodiment of the present invention, the A-type support member having the A-type connector combined at one side thereof may be inserted together with the nickel felt into the hollow portion of the cell while being previously inserted into a hollow portion of the nickel felt.

Subsequently, a plurality of sub-cells are prepared in which the nickel felt and the A-type support member are inserted, and the A-type connector is connected to one side of the A-type support member. The prepared sub-cells are screw-connected to one another in a longitudinal direction thereof.

Subsequently, boundary portions between the cells and the A-type support members are sealed with a sealing member 150. Thermiculite #866 (product name) may be used as the sealing member 150.

Subsequently, the current collecting layer 117 is formed by coating a La_{0.9}Sr_{0.1}CoO₃ powder available for a cathode current collecting material on the second electrode 116 of each of the sub-cells using a plasma spray technique. The current collecting layer 117 is formed to cover of the second electrode 116 of the first sub-cell (e.g., 110a), the electrolyte layer 114 exposed to one side of the second electrode 116, and a portion of the A-type connector (e.g., 130b) between the first sub-cell and the second sub-cell (e.g., 110b) adjacent to the first sub-cell.

Hereinafter, the operation of the combined cell module 100 of the first embodiment will be described in more detail.

In FIG. 2, a black arrow 141 may be the flow direction of a fuel, and a white arrow 143 may be the flow direction of an oxidizer. The fuel may include methane, propane, butane and the like. The oxidizer may include air, oxygen, gas and the like.

The fuel flowing from the first manifold 140a to the hollow portion at one side of the combined cell module 100 flows along the outer surfaces of the A-type support members 120a to 120d. At this time, the fuel flows while passing through the A-type connectors 130a to 130d, openings of the end connector 130e and the porous member 118 between the openings. Most of the fuel flowing into the combined cell module 100 is converted into a reformate gas containing abundant hydrogen under a high-temperature atmosphere. The hydrogen is supplied to the first electrode of each of the sub-cells while moving along the flow direction of the fuel.

The combined cell module 100 generates electric energy and water by means of an electrochemical reaction of oxygen in the air and hydrogen. Here, the oxygen is supplied to the second electrode 116, and the hydrogen is supplied to the first electrode 112. The electric energy is supplied to an external circuit or load (not shown) connected to the combined cell module 100. A reaction byproduct such as water and an unreacted fuel are moved along the flow direction of the fuel on the outer surface of the rod-shaped A-type support member and then discharged to the second manifold 140b connected to the other side of the combined cell module 100. The electrochemical reaction respectively generated at the first and second electrodes (anode and cathode) of each of the sub-cells are represented by the following reaction formula 1.

Referring to FIGS. 6 to 8, the combined cell module 200 includes a plurality of sub-cells 210a, 210b, 210c and 210d. Each of the sub-cells includes a plurality of cells and B-type support members 220a, 220b, 220c and 220d each having a portion inserted into a hollow portion of each of the cells in its longitudinal direction. Connectors 230a, 230b, 230c and 230d are integrally provided at one side of the respective B-type support members. The combined cell module 200 further includes B-type coupling portions 250a, 250b, 250c and 250d disposed between two adjacent sub-cells and between a sub-cell positioned at one end of the combined cell module 200 and an end connector 230e. The end connector 230e is provided between one end of the combined cell module 200 and a manifold 140b.

Each of the sub-cells 210a, 210b, 210c and 210d includes a first electrode 112 for forming a tube-type support, and an electrolyte layer 114 and a second electrode 116, sequentially stacked on the outer surface of the first electrode 112.

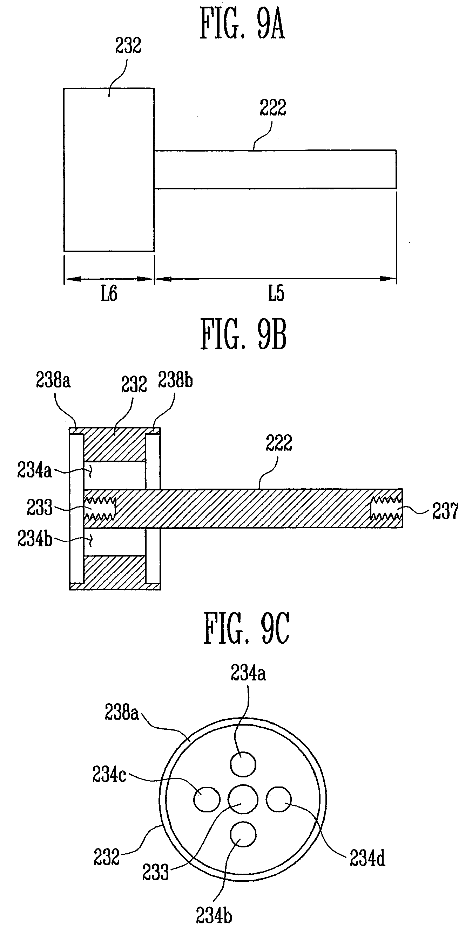

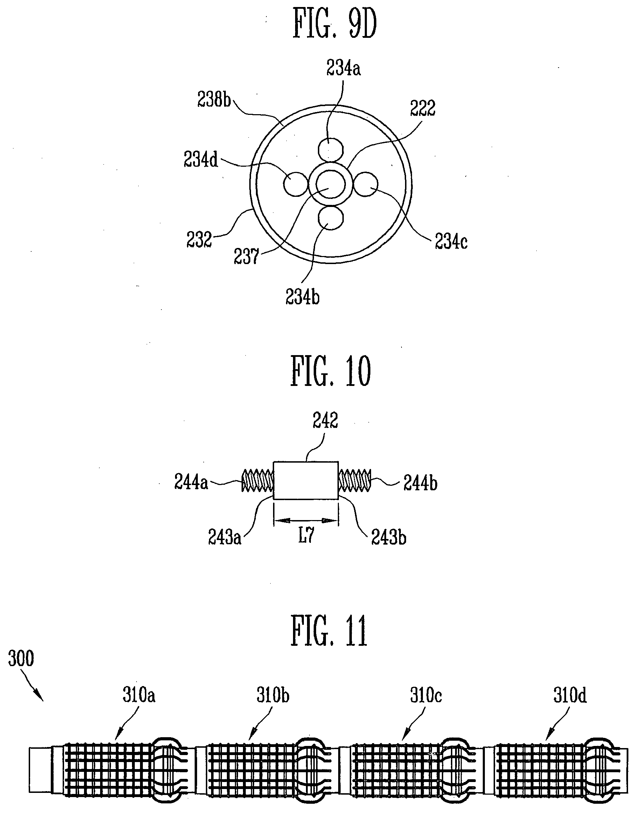

The B-type support members 220a, 220b, 220c and 220d are physically connected while being electrically isolated from one another. The B-type support members 220a, 220b, 220c and 220d are disposed by passing from one end to the other end of the combined cell module 200. In one embodiment, as illustrated in FIGS. 9A to 9D, each of the B-type support members has a structure in which a long handle is attached to a central portion of one side of a wheel-shaped body 232. That is, each of the B-type support members includes a first female screw 233 formed in an interior of the central portion at one side of the body 232, a plurality of openings 234a, 234b, 234c and 234d passing through the body 232 in one direction around the first female screw 233, and a support portion 222 extending long to the exterior from the central portion of the other side of the body 232 while facing the first female screw 233. A second female screw 237 is formed at the end of the support portion 222, extending to the exterior. Flanges 238a and 238b are respectively formed at both ends of the body 232 to slightly protrude to the direction in which the support portion 222 extends.

The B-type coupling portions 250a, 250b, 250c and 250d have a thermal expansion coefficient different from that of the B-type support members and are disposed between the B-type support members. In one embodiment, each of the B-type coupling portions 250a, 250b, 250c and 250d has the shape of a double male screw as illustrated in FIG. 10. That is, each of the B-type coupling portions includes a short cylindrical body 242, and first and second male screws 244a and 244b respectively extending by a predetermined length to the exterior from both end portions of the body 242 with stepped portions interposed therebetween. Here, the sectional area of each of the first and second male screws 244a and 244b is smaller than that of the body 242.

In this embodiment, the B-type support member may be formed of ferrite stainless steel, and the B-type coupling portion may be formed of alumina (Al₂O₃). In this case, the length of the B-type coupling portion and the length of the support portion of the B-type support member are controlled considering the thermal expansion coefficient of the tube-type cell constituting the sub-cell, thereby reducing the difference of thermal expansion coefficients between components of the combined cell module 200. For example, it is assumed that the length L5 (see FIG. 9A) of the support portion 222 of the B-type support member is about 80% and the length L7 (see FIG. 10) of the body 242 of the B-type coupling portion is about 20%, based on the length of the sub-cell or tube-type cell. Then, the thermal expansion coefficient of the combined structure of two components becomes about 12x10⁶[K⁻¹] from room temperature to 1000°C.

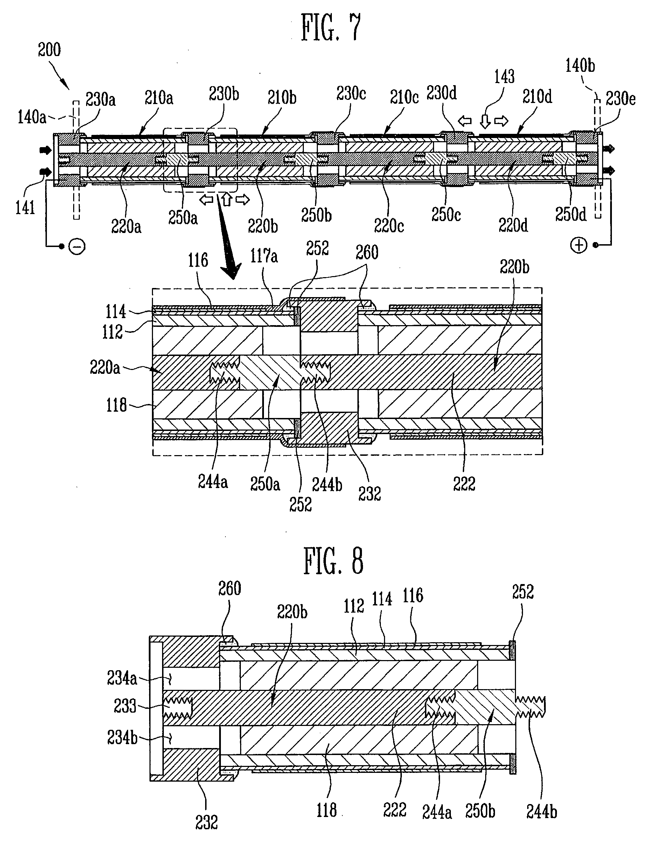

Referring back to FIGS. 7 and 8, in one embodiment, a porous member 118 between the first electrode 112 and the support portion 222 of each of the B-type support members 220a, 220b, 220c and 220d in the SOFC combined cell module 200. The porous member 118 is flexible and is filled in the space between the first electrode 112 and the support portion 222 in the sub-cell. The porous member 118 has a conductive property and connects between the first electrode 112 and the support portion 222 in the sub-cell.

In one embodiment, an insulating member 252 is provided between adjacent sub-cells. That is, the insulating member 252 allows the first electrode 112 of the first sub-cell 210a to be electrically insulated from the connector 230b of the second sub-cell 210. One side of the insulating member 252 may be supported by a flange portion of the connector 230b.

In one embodiment, boundary portions between the sub-cells 210a, 210b, 210c and 210d and between the cell of each of the sub-cells and the connector may be sealed with a sealing member 260. The sealing member 260 may be formed by melting BNi-2 (Cr 7%, B 3%, Si 4.5%, Fe 3%, C 0.05%, Ni Bal.) available for a Ni-based brazing material using an induction brazing technique.

A current collecting layer 117a is provided on the second electrode 116 of each of the sub-cells. In one embodiment, the current collecting layer 117a may be consecutively formed on the second electrode 116, the electrolyte layer 114 exposed to one side of the second electrode 116 and a portion of the connector of the B-type support member adjacent to the electrolyte layer 114.

In the combined cell module 200, a current collecting portion 117a connected to the second electrode 116 of the first sub-cell (e.g., 210a) is connected to the first electrode 112 of the second sub-cell (e.g., 210b) through the B-type support member 220b of the second sub-cell 210b. Thus, the electrical serial connection structure of the sub-cells can be stably formed as well as the mechanical serial connection structure of the sub-cells.

Referring to FIGS. 11 to 13, the combined cell module 300 includes a plurality of sub-cells 310a, 310b, 310c and 310d. Each of the sub-cells includes a plurality of cells and C-type support members 320a, 320b, 320c and 320d each having a portion inserted into a hollow portion of each of the cells in its longitudinal direction. Connectors 330a, 330b, 330c and 330d are integrally provided at one side of the respective C-type support members. The combined cell module 300 further includes C-type coupling portions 350a, 350b, 350c and 350d disposed between two adjacent C-type support members and between a sub-cell positioned at one end of the combined cell module 300 and an end connector 330e. The end connector 330e connects the one end of the combined cells module 300 to a manifold 140b so that a fluid can flow therethrough.

Each of the sub-cells 310a, 310b, 310c and 310d includes a first electrode 112 for forming a tube-type support, and an electrolyte layer 114 and a second electrode 116, sequentially stacked on the outer surface of the first electrode 112.

The C-type support members 320a, 320b, 320c and 320d are physically connected together with the C-type coupling members 350a, 350b, 350c and 350d while being electrically isolated from one another by the C-type coupling members. The C-type support members 320a, 320b, 320c and 320d are disposed by passing from one end to the other end of the combined cell module 300. Here, it can be seen that each of the C-type coupling members serves as a kind of insulating member.

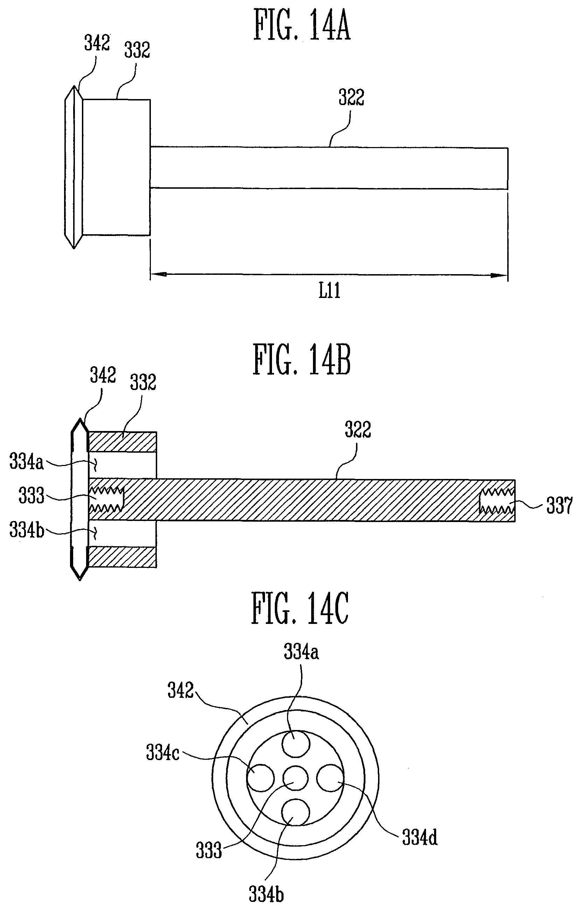

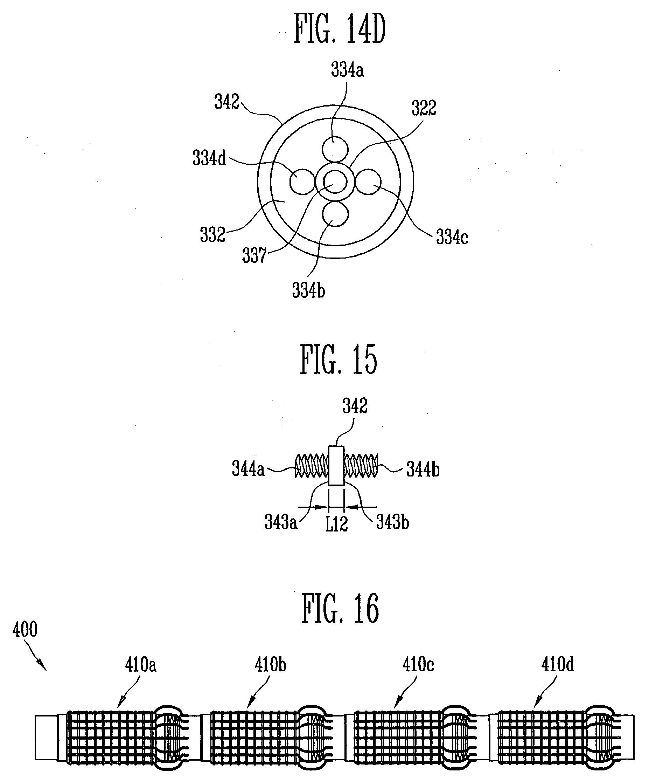

In one embodiment, as illustrated in FIGS. 14A to 14D, each of the C-type support members 320a, 320b, 320c and 320d has a structure in which a support portion with a long hand shape is attached to a central portion of one side of a wheel-shaped body 332, and a resilient portion 342 is integrally formed at an edge of the other side of the body 332. Here, the body corresponds to each of the connectors 330a, 330b, 330c and 330d.

Each of the C-type support members includes a first female screw 333 formed in an interior of the central portion at one side of the body 332, a plurality of openings 334a, 334b, 334c and 334d passing through the body 332 in one direction around the first female screw 333, and a support portion 322 extending along to the exterior from the central portion of the other side of the body 332 while facing the first female screw 333. A second female screw 337 is formed at an end of the support portion 322 to face the first female screw 333.

The resilient portion 342 has an expanding and contracting structure and is integrally connected to an edge of one side surface of the body 332 of the C-type support member, at which the first female screw 333 is positioned. The resilient portion 342 is resiliently contracted or expanded slightly between the sub-cells when pressure stress is generated between the sub-cells and the C-type support members. The C-type coupling portions 350a, 350b, 350c and 350d have an insulating property. Each of the C-type coupling portions 350a, 350b, 350c and 350d has a sectional area and a sectional shape, identical to that of the support portion 322 of the C-type support member. The C-type coupling portions 350a, 350b, 350c and 350d are disposed between the C-type support members. Each of the C-type coupling portions 350a, 350b, 350c and 350d has the shape of a double male screw as illustrated in FIG. 15. That is, each of the C-type coupling portions includes a flat cylindrical body 342, and first and second male screws 344a and 344b respectively extending by a predetermined length to the exterior from central portions at both sides of the body 342 with stepped portions interposed therebetween. Here, the sectional area of each of the first and second male screws 344a and 344b is smaller than that of the body 342. The length of the C-type coupling portion may be shorter than that of the B-type coupling portion of FIG. 10.

In this embodiment, the C-type support member may be formed of ferrite stainless steel, and the C-type coupling portion may be formed of alumina (Al₂O₃). In this case, the length L12 (see FIG. 15) of the C-type coupling portion may be appropriately controlled considering the thermal expansion coefficient of the tube-type cell constituting the sub-cell. That is, the ratio of the length L11 (see FIG. 14A) of the support portion of the C-type support member to the length L12 of the C-type coupling portion is controlled, thereby preventing undesired thermal stress from being generated due to the difference of thermal expansion coefficients between components of the combined cell module 300.

For example, it is assumed that the length L11 of the support portion 322 of the C-type support member is about 95% and the length L12 of the body 342 of the C-type coupling portion is about 5%, based on the length of the sub-cell. Then, the thermal expansion coefficient of the combined structure of two components becomes about 10x10⁻⁶[K⁻¹] from room temperature to 1000°C. That is, if the ratio of the lengths L11 and L12 of the two combined components is controlled, the thermal expansion coefficient of the combined structures of the C-type support members and the C-type coupling portions is substantially identical to or slightly smaller than that of the tube-type cells, thereby reducing thermal stress from being generated due to the difference of thermal expansion coefficients.

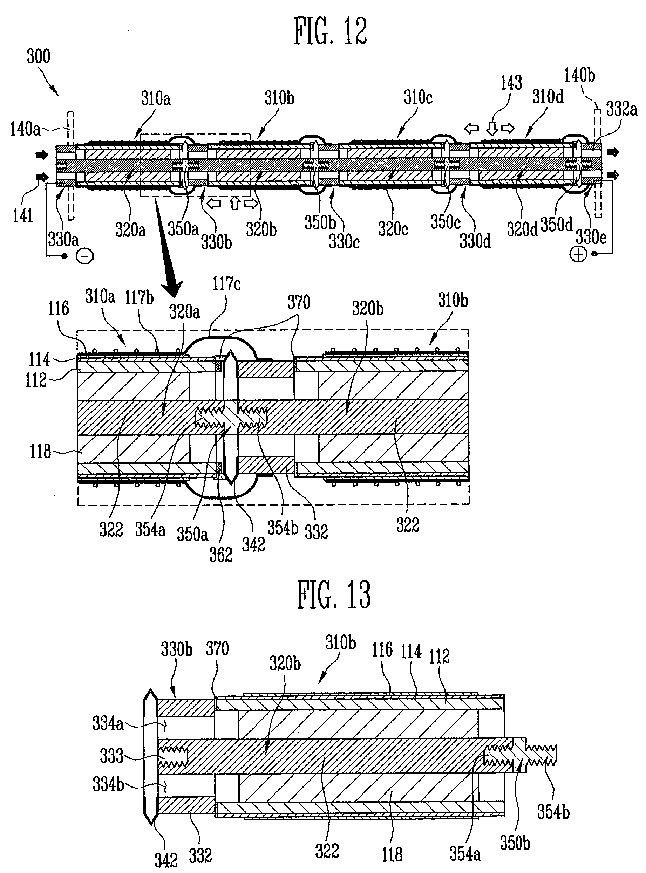

Referring back to FIGS. 12 and 13, the first C-type support member 320a positioned at one end portion of the combined cell module 300 may be provided with a structure in which a resilient portion is omitted, slightly different from the second C-type support member 320b. The connector 330a of the first C-type support member 320a connects one end of the combined cell module 300 to the first manifold 140a so that a fluid can flow therethrough. Meanwhile, the end connector 330e may have a similar shape to that of the body 332 of the C-type support member. The end connector 330e allows the other end of the combined cell module 300 to be fixedly connected to the second manifold 140b with the fourth C-type coupling member 350d interposed therebetween.

In one embodiment, a porous member 118 is provided between the first electrode 112 and the support portion 322 of each of the C-type support members 320a, 320b, 320c and 320d in the combined cell module 300.

In one embodiment, an insulating member 362 is provided between adjacent sub-cells, i.e., a specific sub-cell (e.g., 310a) and another sub-cell (e.g., 310b) adjacent to the specific sub-cell. The insulating member 362 electrically insulates the first electrode 112 in the first sub-cell 310a from the resilient portion 342 of the C-type support member 320b in the second sub-cell 310b.

In one embodiment, boundary portions between the sub-cells 310a, 310b, 310c and 310d and between the tube-type cell and the connector in each of the sub-cells may be sealed with a sealing member 370. The sealing member 370 may be formed to cover the insulating member 362 between two adjacent sub-cells. The sealing member 370 may be formed of a sealing material including glass based, crystallized glass based, MICA, MICA-glass composite, glass-filler composite and the like. A current collecting layer 117b is provided on the second electrode 116 of each of the sub-cells 310a, 310b, 310c and 310d. The current collecting layer 117b may be formed of stainless steel, Ni-based thermal resistance alloy containing silver (Ag). In this embodiment, the current collecting layer 117b is formed using a conductive mesh. In another embodiment, the current collecting layer 117b may be formed by winding a conductive wire on the second electrode 116. In this case, the current collecting layer 117b may be welded to the conductive body 332 of the C-type support member using a spot-welding technique. In still another embodiment, the current collecting layer 117b may be formed by coating a conductive oxide such as LaCoO₃.

In the combined cell module 300, the current collecting layer 117b connected to the second electrode 116 of the first sub-cell (e.g., 310a) is connected to the first electrode 112 of the second sub-cell (e.g., 310b) through the C-type support member 320b of the second sub-cell. In the enlarged view of FIG. 12, the current collecting layer 117b is connected to the connector 330b of the C-type support member 230b by a wire or interconnection 117c.

According to the aforementioned embodiment, the electrical serial connection structure of the sub-cells can be stably formed as well as the physical serial connection structure of the sub-cells. That is, two or more anode supported cells are physically and electrically connected in series, so that a combined cell module having excellent durability can be easily manufactured.

Referring to FIGS. 16 to 18, the combined cell module includes a plurality of sub-cells 410a, 410b, 410c and 410d. Each of the sub-cells includes a plurality of cells and D-type support members 420a, 420b, 420c and 420d each having a portion inserted into a hollow portion of each of the cells in its longitudinal direction. Connectors 430a, 430b, 430c and 430d are integrally provided at one side of the respective D-type support members. The combined cell module 400 further includes insulating members 450 disposed between two adjacent D-type support members and between a sub-cell positioned at one end of the combined cell module 400 and an end connector 430e. The end connector 430e connects the one end of the combined cells module 400 to a manifold 140b so that a fluid can flow therethrough.

Each of the sub-cells 410a, 410b, 410c and 410d includes a first electrode 112 for forming a tube-type support, and an electrolyte layer 114 and a second electrode 116, sequentially stacked on the outer surface of the first electrode 112.

The D-type support members 420a, 420b, 420c and 420d are physically connected to one another while being electrically isolated from one another by the insulating members 450. The D-type support members 420a, 420b, 420c and 420d are disposed by passing from one end to the other end of the combined cell module 400.

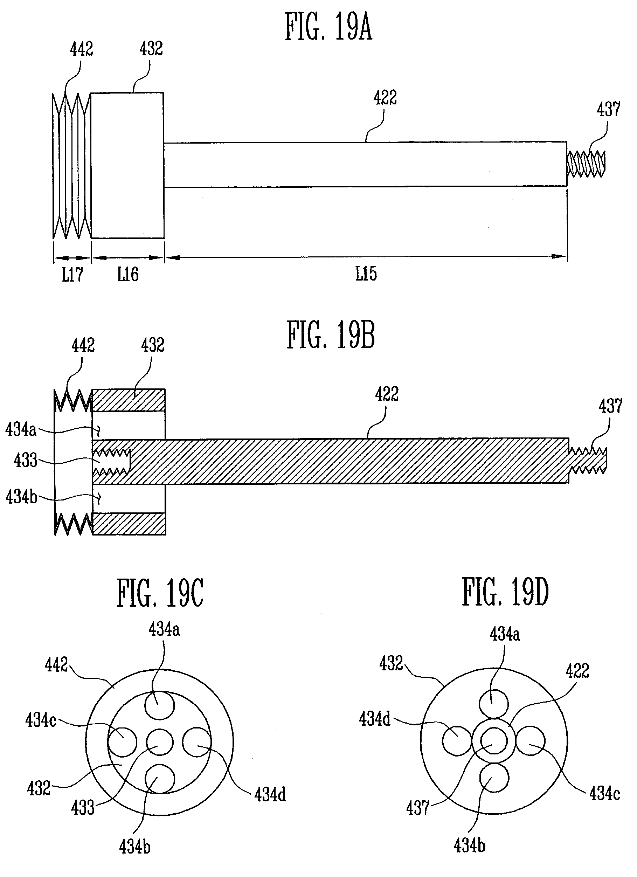

In one embodiment, each of the D-type support members 420a, 420b, 420c and 420d has a hammer shape as illustrated in FIG. 19A to 19D. That is, each of the D-type support members includes a body 432 corresponding to a head portion, a support portion 422 extending long in a rod shape from a central portion of one side of the body 432, and a resilient portion 442 disposed at an end of the other side of the body 432, which are integrally combined with one another. Each of the D-type support members further includes a first female screw 433 formed inside a central portion of one side of the body 432, a plurality of openings 434a, 434b, 434c and 434d passing through the body 432 in one direction around the first female screw 433, and a male screw 437 formed from an end portion of the support member 422 to the exterior of the support member 422 while facing the first female screw 433.

The resilient member 442 has an expanding and contracting structure and is integrally connected to an edge of one side surface of the body 432 of the D-type support member, at which the first female screw 433 is positioned. The resilient portion 442 is resiliently contracted or expanded between the sub-cells when pressure stress is generated between the sub-cells and the D-type support members. The resilient member 442 of this embodiment is formed to have a higher elastic modulus than that of the resilient portion 342 of FIG. 13. Therefore, in the combined cell module 400 of this embodiment, the C-type coupling portions 350a, 350b, 350c and 350d of FIG. 12 may be substantially omitted. However, an insulating member 450 is provided between the D-type support members for the purpose of electrical isolation between the D-type support members. The insulating member 450 may be formed as an insulating coating layer.

In this embodiment, the D-type support member may be formed of ferrite stainless steel. In this case, the elastic force of the resilient portion may be appropriately controlled considering the difference of thermal expansion coefficients between the tube-type cell constituting the sub-cell and the D-type support member. That is, the elastic force of the resilient portion 442 is appropriately controlled, thereby reducing thermal stress generated due to the difference of thermal expansion coefficients between components of the combined cell module 400.

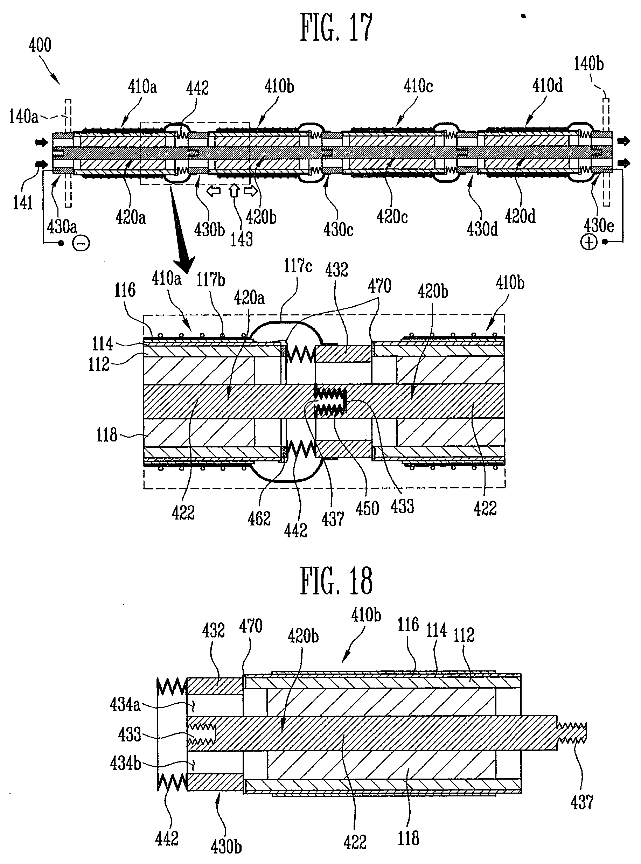

Referring back to FIGS. 17 and 18, the first D-type support member 420a positioned at one end portion of the combined cell module 400 may have a structure in which a resilient portion is omitted, slightly different from the second D-type support member 420b. The connector 430a of the first D-type support member 420a connects one end of the combined cell module 400 to a manifold 140a so that a fluid can flow therethrough. Meanwhile, the end connector 430e may have a similar shape to that of the body 432 of the D-type support member integrally provided with the resilient portion. The end connector 430e connects the other end of the combined cell module 400 to another manifold 140b so that a fluid can flow therethrough.

In one embodiment, a porous member 118 may be provided between the first electrode 112 and the support portion 422 of each of the D-type support members 420a, 420b, 420c and 420d in each of the sub-cells constituting the combined cell module 400.

In one embodiment, another insulating member 462 (hereinafter, referred to as a second insulating member) may be provided between adjacent sub-cells, i.e., between a specific sub-cell (e.g., 410a) and another sub-cell (e.g., 410b) adjacent to the specific sub-cell. The second insulating member 462 insulates the first electrode 112 of the first sub-cell 410a from the resilient portion 442 of the D-type support member 420b in the second sub-cell 410b.

In one embodiment, boundary portions between the sub-cells 410a, 410b, 410c and 410d and between the tube-type cell and the connector in each of the sub-cells may be sealed with a sealing member 470. The sealing member 470 may be formed to cover the second insulating member 462 between two adjacent sub-cells. The sealing member 470 may be formed of a sealing material including glass based, crystallized glass based, MICA, MICA-glass composite, glass-filler composite and the like.

A current collecting layer 117b is provided on the second electrode 116 of each of the sub-cells 410a, 410b, 410c and 410d. The current collecting layer 117b may be formed of stainless steel, Ni-based thermal resistance alloy containing silver (Ag). In this embodiment, the current collecting layer 117b is formed using a conductive mesh. The current collecting layer 117b is connected to the conductive body 432 of the D-type support member through a conducting wire 117c. The conducting wire 117c may be welded to the conductive body 432 using a spot-welding technique. In the combined cell module 400, the current collecting layer 117b connected to the second electrode 116 of the first sub-cell (e.g., 410a) is connected to the first electrode 112 of the second sub-cell (e.g., 410b) through the D-type support member 420b of the second sub-cell adjacent to the first sub-cell. Thus, the electrical serial connection structure of the sub-cells can be stably formed as well as the mechanical serial connection structure of the sub-cells.

In the aforementioned embodiment, the plurality of sub-cells are basically configured as anode supported cells. However, it will be apparent through the aforementioned disclosure that the sub-cells of these embodiments can be configured using anode supported cells, cathode supported cells, segmented in series cells or combination thereof.

According to the aforementioned embodiments, a plurality of tube-type anode supported SOFC cells are connected to one another in their longitudinal direction using a solid support member, thereby easily manufacturing a combined cell module for a solid oxide fuel cell having a desired length, i.e., at least about 1200mm. The support members may alternatively be hollow, while still providing a rigid support structure.

Further, in a serial connection structure of tube-type anode supported SOFC cells, the serial connection structure of SOFC cells can be mechanically and stably supported using support members, and by using a buffer portion, it is possible to prevent a device from being damaged due to the thermal stress generated by the difference of thermal expansion coefficients between components.

Further, since the connection between a combined cell module and a manifold is reinforced by the support members, it is possible to prevent a device from being broken due to the mechanical stress generated in the combined cell module for a solid oxide fuel cell and a connecting portion of the manifold.

Further, in a single combined cell module provided with a plurality of anode supported SOFC cells, the electrical serial connection structure between the SOFC cells and the current collecting structure can be easily formed.

Further, a large-size SOFC system can be effectively designed and manufactured using a combined cell module provided with a plurality of anode supported SOFC cells.

Although the present invention has been described in connection with the accompanying drawings and the preferred embodiments, it is not limited thereto. Further, it will be understood by those skilled in the art that various modifications and changes can be made thereto without departing from the scope of the invention as set out in the appended claims.

## Claims

1. A cell module (100) for a solid oxide fuel cell, comprising first and second sub-cells (110a - d, 210a - d, 310a - d, 410a - d) and a connector (130a - d; 230a - d; 330a-d; 430a - d) between the sub-cells connecting the sub-cells to each other, each of the sub-cells comprising:
a hollow portion (102);
first and second electrodes (112, 116) and an electrolyte layer (114) between the electrodes; and
a support member (120a - d, 220a - d, 320a - d; 420a - d) extending centrally along the length of the sub-cell within the hollow portion, the support member being spaced apart from the first and second electrodes (112),
wherein a plurality of the support members are connected together in a linear configuration to provide a substantially straight tube through which fluid can flow.

2. The cell module of claim 1, wherein the connector (130a - d) includes a body (132) and a coupling portion (136) protruding from the body for connecting the connector to the support member (120a - d).

3. The cell module of claim 2, wherein the coupling portion includes a screw thread (133, 137) arranged to engage with a corresponding screw thread (124a, 124b) at an end of the support member.

4. The cell module of claim 3, wherein the support member has a screw thread (124a, 124b) at each end thereof and the coupling portion of the connector (130a-d) has a screw thread at each end thereof to enable the support member to be connected between two of the connectors.

5. The cell module of claim 1, wherein the support member (220a - d; 320a - d; 420a - d) is integrally provided with the connector.

6. The cell module of claim 5, further comprising a coupling portion (250a - d; 350a - d) for connecting the support member (220a, 320a) of the connector of one sub-cell to the connector (230b, 330b) of another sub-cell.

7. The cell module of claim 6, wherein the coupling portion comprises a double male-ended screw thread (244a, 244b; 354a, 354b) for insertion into a female screw thread (233, 333) in the connector and a female screw thread (237, 337) in the support member.

8. The cell module of any one of the preceding claims, further comprising a current collecting layer (117, 117a) disposed on the second electrode (116), on the electrolyte layer (114) and on the connector (130) for electrically connecting two adjacent sub-cells to one another.

9. The cell module of claim 5, 6 or 7, wherein the connector comprises a main body (332, 432) and a support member body (322, 422), further comprising a resilient portion (342, 442) connected to the main body.

10. The cell module of claim 9, further comprising a current collecting layer (117b) disposed on the second electrode (116) and an interconnection (117c) connecting the current collecting layer to the connector, for electrically connecting two adjacent sub-cells to one another.

11. The cell module of any one of the preceding claims when dependent on claim 2 or claim 6, wherein the connector and the support member are made of materials having different coefficients of thermal expansion, wherein the relative lengths of the coupling portion and the support member are arranged to reduce the effects of thermal expansion.

12. The cell module of claim 9 or 10, wherein the resilient portion is arranged to expand and contract between the sub-cells so as to reduce the effects of thermal expansion.

13. The cell module of claim 5, wherein the support member (420a) of one sub-cell is configured to be coupled to the connector (430b) of another sub-cell, further comprising insulating members (450) arranged between the support member (420a) and the connector (430b) to insulate the support members of adjacent sub-cells from one another.

14. The cell module of any one of the preceding claims, wherein the support member is rod-shaped and the support members of adjacent sub-cells are connected to one another to provide a substantially linear rod running through the cell module.

15. The cell module of claim 14, wherein the support member is hollow.

16. The cell module of any one of the preceding claims, further comprising a conducting porous member (118) within the hollow portion, the porous member forming a sleeve for receiving the support member.

17. The cell module of any one of the preceding claims, further comprising an insulating sealing member (150, 252, 362, 462) disposed at a boundary between the connector and a sub-cell.

## Patentansprüche

1. Zellenmodul (100) für eine Feststoffoxid-Brennstoffzelle, umfassend erste und zweite Unterzellen (110a - d, 210a - d, 310a - d, 410a - d) und einen Verbinder (130a - d; 230a - d; 330a - d; 430a - d) zwischen den Unterzellen, welcher die Unterzellen miteinander verbindet, wobei jede der Unterzellen umfasst:
einen hohlen Abschnitt (102);
erste und zweite Elektroden (112, 116) sowie eine Elektrolytschicht (114) zwischen den Elektroden; und
ein Stützglied (120a - d, 220a - d, 320a - d; 420a - d), das sich mittig entlang der Länge der Unterzelle in dem hohlen Abschnitt erstreckt, wobei das Stützglied von den ersten und zweiten Elektroden (112) beabstandet ist,
wobei eine Vielzahl der Stützglieder in linearer Konfiguration miteinander verbunden sind, um ein im Wesentlichen gerades Rohr bereitzustellen, durch das ein Fluid fließen kann.

2. Zellenmodul nach Anspruch 1, wobei der Verbinder (130a - d) einen Körper (132) und einen Kupplungsabschnitt (136) aufweist, der von dem Körper hervorragt, um den Verbinder mit dem Stützglied (120a - d) zu verbinden.

3. Zellenmodul nach Anspruch 2, wobei der Kupplungsabschnitt ein Schraubengewinde (133, 137) aufweist, das zum Eingriff mit einem entsprechenden Schraubengewinde (124a, 124b) an einem Ende des Stützglieds angeordnet ist.

4. Zellenmodul nach Anspruch 3, wobei das Stützglied ein Schraubengewinde (124a, 124b) an jedem seiner Enden aufweist und der Kupplungsabschnitt des Verbinders (130a - d) ein Schraubengewinde an jedem seiner Enden aufweist, um ein Verbinden des Stützglieds zwischen zwei der Verbinder zu ermöglichen.

5. Zellenmodul nach Anspruch 1, wobei das Stützglied (220a - d; 320a - d; 420a - d) einstückig mit dem Verbinder vorgesehen ist.

6. Zellenmodul nach Anspruch 1, ferner umfassend einen Kupplungsabschnitt (250a - d; 350a - d) zum Verbinden des Stützglieds (220a, 320a) des Verbinders einer Unterzelle mit dem Verbinder (230b, 330b) einer anderen Unterzelle.

7. Zellenmodul nach Anspruch 6, wobei der Kupplungsabschnitt ein doppeltes außenendseitiges Schraubengewinde (244a, 244b; 354a, 354b) zum Einbringen in ein Schraubeninnengewinde (233, 333) in dem Verbinder und ein Schraubeninnengewinde (237, 337) im Stützglied umfasst.

8. Zellenmodul nach einem der vorstehenden Ansprüche, ferner umfassend eine Stromsammelschicht (117, 117a), die auf der zweiten Elektrode (116), auf der Elektrolytschicht (114) und auf dem Verbinder (130) angeordnet ist, um zwei benachbarte Unterzellen elektrisch miteinander zu verbinden.

9. Zellenmodul nach Anspruch 5, 6 oder 7, wobei der Verbinder einen Hauptkörper (332, 432) und einen Stützgliedkörper (322, 422) umfasst, ferner umfassend einen elastischen Abschnitt (342, 442), der mit dem Hauptkörper verbunden ist.

10. Zellenmodul nach Anspruch 9, ferner umfassend eine Stromsammelschicht (117b), die auf der zweiten Elektrode (116) und einer die Stromsammelschicht mit dem Verbinder verbindenden Verbindung (117c) zum elektrischen Verbinden zweier benachbarten Unterzellen miteinander angeordnet ist.

11. Zellenmodul nach einem der vorstehenden Ansprüche, wenn diese abhängig sind von Anspruch 2 oder Anspruch 6, wobei der Verbinder und das Stützglied aus Materialien mit unterschiedlichen Wärmeausdehnungskoeffizienten bestehen, wobei die relativen Längen des Kupplungsabschnitts und des Stützglieds so ausgeführt sind, dass sie die Auswirkungen der Wärmeausdehnung verringern.

12. Zellenmodul nach Anspruch 9 oder 10, wobei der elastische Abschnitt so angeordnet ist, dass er sich zwischen den Unterzellen ausdehnt und zusammenzieht, um die Auswirkungen der Wärmeausdehnung zu verringern.

13. Zellenmodul nach Anspruch 5, wobei das Stützglied (420a) einer Unterzelle zum Verbinden mit dem Verbinder (430b) einer anderen Unterzelle ausgeführt ist, ferner umfassend Isolierelemente (450), die zwischen dem Stützglied (420a) und dem Verbinder (430b) angeordnet sind, um die Stützglieder benachbarter Unterzellen gegeneinander zu isolieren.

14. Zellenmodul nach einem der vorstehenden Ansprüche, wobei das Stützglied stabförmig ist und die Stützglieder benachbarter Unterzellen miteinander verbunden sind, um einen im Wesentlichen linear durch das Zellenmodul verlaufenden Stab bereitzustellen.

15. Zellenmodul nach Anspruch 14, wobei das Stützglied hohl ist.

16. Zellenmodul nach einem der vorstehenden Ansprüche, ferner umfassend ein leitendes poröses Element (118) innerhalb des hohlen Abschnitts, wobei das poröse Element eine Hülse zur Aufnahme des Stützglieds bildet.

17. Zellenmodul nach einem der vorstehenden Ansprüche, ferner umfassend ein isolierendes Dichtelement (150, 252, 362, 462), das an einer Grenze zwischen dem Verbinder und einer Unterzelle angeordnet ist.

## Revendications

1. Module de pile (100) destiné à une pile à combustible à oxyde solide, comprenant des première et deuxième sous-piles (110a-d, 210a-d, 310a-d, 410a-d) et un connecteur (130a-d ; 230a-d ; 330a-d ; 430a-d) entre les sous-piles connectant les sous-piles l'une à l'autre, chacune des sous-piles comprenant :
une partie creuse (102) ;
des première et deuxième électrodes (112, 116) et une couche d'électrolyte (114) entre les électrodes ; et
un élément de support (120a-d, 220a-d, 320a-d ; 420a-d) s'étendant de manière centrale le long de la longueur de la sous-pile dans la partie creuse, l'élément de support étant espacé des première et deuxième électrodes (112),
dans lequel une pluralité d'éléments de support sont connectés les uns aux autres dans une configuration linéaire pour fournir un tube essentiellement droit à travers lequel un fluide peut s'écouler.

2. Module de pile de la revendication 1, dans lequel le connecteur (130a-d) comporte un corps (132) et une partie de couplage (136) faisant saillie à partir du corps pour connecter le connecteur à l'élément de support (120a-d) .

3. Module de pile de la revendication 2, dans lequel la partie de couplage comporte un filetage de vis (133, 137) agencé pour venir en prise avec un filetage de vis correspondant (124a, 124b) au niveau d'une extrémité de l'élément de support.

4. Module de pile de la revendication 3, dans lequel l'élément de support a un filetage de vis (124a, 124b) au niveau de chaque extrémité de celui-ci et la partie de couplage du connecteur (130a-d) a un filetage de vis au niveau de chaque extrémité de celle-ci pour permettre à l'élément de support d'être connecté entre deux des connecteurs.

5. Module de pile de la revendication 1, dans lequel l'élément de support (220a-d ; 320a-d ; 420a-d) est pourvu, d'un seul tenant, du connecteur.

6. Module de pile de la revendication 5, comprenant en outre une partie de couplage (250a-d ; 350a-d) pour connecter l'élément de support (220a, 320a) du connecteur d'une sous-pile au connecteur (230b, 330b) d'une autre sous-pile.

7. Module de pile de la revendication 6, dans lequel la partie de couplage comprend un filetage extérieur à deux extrémités (244a, 244b ; 354a, 354b) pour l'insertion dans un filetage intérieur (233, 333) dans le connecteur et un filetage intérieur (237, 337) dans l'élément de support.

8. Module de pile de l'une quelconque des revendications précédentes, comprenant en outre une couche de collecte de courant (117, 117a) disposée sur la deuxième électrode (116), sur la couche d'électrolyte (114) et sur le connecteur (130) pour connecter électriquement deux sous-piles adjacentes à une autre sous-pile.

9. Module de pile de la revendication 5, 6 ou 7, dans lequel le connecteur comprend un corps principal (332, 432) et un corps d'élément de support (322, 422), comprenant en outre une partie élastique (342, 442) connectée au corps principal.

10. Module de pile de la revendication 9, comprenant en outre une couche de collecte de courant (117b) disposée sur la deuxième électrode (116) et une interconnexion (117c) connectant la couche de collecte de courant au connecteur, pour connecter électriquement deux sous-piles adjacentes à une autre sous-pile.

11. Module de pile de l'une quelconque des revendications précédentes lorsqu'elle dépend de la revendication 2 ou de la revendication 6, dans lequel le connecteur et l'élément de support sont réalisés en matériaux ayant différents coefficients de dilatation thermique, les longueurs relatives de la partie de couplage et de l'élément de support étant agencées de manière à réduire les effets de la dilatation thermique.

12. Module de pile de la revendication 9 ou 10, dans lequel la partie élastique est agencée de manière à se dilater et à se contracter entre les sous-piles afin de réduire les effets de la dilatation thermique.

13. Module de pile de la revendication 5, dans lequel l'élément de support (420a) d'une sous-pile est configuré pour être couplé au connecteur (430b) d'une autre sous-pile, comprenant en outre des éléments isolants (450) agencés entre l'élément de support (420a) et le connecteur (430b) pour isoler les éléments de support de sous-piles adjacentes les uns des autres.

14. Module de pile de l'une quelconque des revendications précédentes, dans lequel l'élément de support est en forme de tige et les éléments de support de sous-piles adjacentes sont connectés les uns aux autres pour fournir une tige essentiellement linéaire traversant le module de pile.

15. Module de pile de la revendication 14, dans lequel l'élément de support est creux.

16. Module de pile de l'une quelconque des revendications précédentes, comprenant en outre un élément poreux conducteur (118) dans la partie creuse, l'élément poreux formant un manchon pour recevoir l'élément de support.

17. Module de pile de l'une quelconque des revendications précédentes, comprenant en outre un élément d'étanchéité isolant (150, 252, 362, 462) disposé à une limite entre le connecteur et une sous-pile.
